# EUROPÄISCHE PATENTSCHRIFT

(11) **EP 1 837 728 B1**
(45) Veröffentlichungstag und Bekanntmachung des Hinweises auf die Patenterteilung: **07.11.2007**
(21) Anmeldenummer: 06006214.8
(22) Anmeldetag: 25.03.2006
(51) Int. Cl.: G05D 23/19, F16K 31/02

(54) **Anordnung zur Einstellung eines Ventils**
Device for adjusting a valve
Dispositif pour régler un vanne

(43) Veröffentlichungstag der Anmeldung: 26.09.2007
(73) Patentinhaber: Möhlenhoff Wärmetechnik GmbH, 38229 Salzgitter (DE)
(72) Erfinder: Seelmann, Christian, 31174 Schellerten (DE); Jaster, Uwe, 39122 Magdeburg (DE)
(74) Vertreter: Döring, Roger

(56) Entgegenhaltungen:
- DE-A1- 19 910 750
- US-A- 5 056 046

## Beschreibung

Die Erfindung betrifft eine Anordnung zur Einstellung eines Ventils, das einen unter der Wirkung einer Ventilfeder stehenden und zwischen zwei Endstellungen in axialer Richtung verstellbaren Stößel aufweist, wobei zur Verstellung des Stößels ein mit einem in seiner Achsrichtung bewegbaren Arbeitskolben ausgerüsteter, temperaturabhängiger Dehnkörper am Ventil befestigt ist, der durch einen an eine Spannungsquelle anschließbaren, elektrischen Widerstand beheizbar ist und dem ein durch den Arbeitskolben des Dehnkörpers bewegbares Stellglied zugeordnet ist, auf welches eine Druckfeder einwirkt, welche das Ventil bei nicht beheiztem Widerstand entgegen der Wirkung der Ventilfeder geschlossen hält und welche bei beheiztem, sich ausdehnendem Dehnkörper durch das dabei von demselben bewegte Stellglied zusammengedrückt wird, so daß das Ventil durch die Ventilfeder geöffnet wird, bei welcher zwischen dem Widerstand und der Spannungsquelle ein durch einen Mikroprozessor zu betätigender, elektrischer Schalter angeordnet ist und bei welcher an den Mikroprozessor eine mit dem Stellglied gekoppelte Meßeinrichtung elektrisch leitend angeschlossen ist, die von der Position des Stellgliedes abhängige elektrische Spannungswerte an den Mikroprozessor liefert (DE 199 10 750 A1).

Ventile, bei denen die Anordnung nach der Erfindung einsetzbar ist, werden beispielsweise in der Heizungs- und Lüftungstechnik verwendet. Sie können grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden, wodurch auch die Menge eines durch ein entsprechendes Rohrsystem strömenden bzw. fließenden Mediums verändert werden kann. Ein solches Medium ist beispielsweise Wasser oder Luft. Die strömende oder fließende Menge wird im folgenden als "Durchflußmenge" bezeichnet.

Durch die DE 3 140 472 C2 ist eine Anordnung bekannt geworden, bei welcher der Stößel eines Ventils durch Einwirkung von elektrischem Strom bewegt wird. Die Anordnung ist mit einem temperaturabhängigen Dehnkörper ausgerüstet, an dem ein elektrischer Widerstand als Heizelement angebracht ist. Ein beispielsweise von einem Thermostat geliefertes Signal bewirkt, daß der Widerstand mit Strom versorgt wird. Durch die dann erzeugte Wärme wird der Arbeitskolben des Dehnkörpers verstellt. Der Stößel des in Ruhestellung geschlossenen Ventils wird dadurch entlastet und durch eine Ventilfeder in Richtung "Öffnung des Ventils" bewegt. Diese bekannte Anordnung hat sich in der Praxis bewährt.

Bei der eingangs geschilderten Anordnung nach der DE 199 10 750 A1 ist an den Mikroprozessor eine mit dem Stellglied gekoppelte Meßeinrichtung angeschlossen, die von der Position des Stellgliedes abhängige elektrische Spannungswerte an den Mikroprozessor liefert, aus denen vom Mikroprozessor eine zwischen einer der Schließstellung des Ventils entsprechenden minimalen Spannung und einer einem vorgegebenen, maximalen Hub des Stößels entsprechenden maximalen Spannung liegende Regelstrecke gebildet und gespeichert wird. Beim Anschließen einer Steuerspannungsquelle an den Mikroprozessor, deren zwischen 0 und 100 % einstellbare Steuerspannung durch den Mikroprozessor den Spannungswerten der in demselben gespeicherten Regelstrecke proportional zugeordnet werden, wird der Schalter durch den Mikroprozessor in zeitlichen Abständen geschlossen und nach Zurücklegung des maximalen Hubs durch den Stößel wieder geöffnet. Als Meßeinrichtung wird eine opto/elektrische Einheit mit zwei Fotostrecken eingesetzt. Auch diese bekannte Anordnung hat sich in der Praxis bewährt.

Der Erfindung liegt die Aufgabe zugrunde, die eingangs geschilderte Anordnung weiterzubilden.

Diese Aufgabe wird gemäß der Erfindung dadurch gelöst,
- daß die Meßeinrichtung ein feststehendes, lineares CCD-Array aufweist, das eine mit einer Vielzahl von Pixeln bestückte Oberseite und eine Unterseite hat, an der elektrische Spannungswerte abgreifbar sind, deren Größe von der Intensität von auf die Pixel fallendem Licht abhängig ist, und das mit dem Mikroprozessor verbunden ist, und
- daß mit dem Stellglied eine über der Oberseite des CCD-Arrays bewegbare Abdeckung verbunden ist, deren Abmessungen klein sind im Verhältnis zu den Abmessungen des CCD-Arrays, durch welche in Abhängigkeit von der Position des Stellgliedes eine der Form der Abdeckung entsprechende Anzahl von Pixeln des CCD-Arrays abgedeckt oder belichtet ist.

Die Buchstaben "CCD" stehen für "Charged Coppled Device". Ein CCD-Array ist auf seiner Oberseite mit einer Vielzahl von Pixeln bestückt, bei denen es sich um elektrische Kondensatoren handelt. Ein CCD-Array hat beispielsweise bei Abmessungen von 0,8 mm x 5 mm auf einer Fläche von 4 mm² 640 Pixel. Wenn auf die Pixel der Oberseite eines CCD-Arrays Licht fällt, wird an der Unterseite desselben eine elektrische Spannung erzeugt, die gemessen und ausgewertet werden kann.

Mit dem Wort "Mikroprozessor" soll jede intelligente elektronische Schaltung mit Speicherfunktion erfaßt sein. Solche Schaltungen werden beispielsweise auch als "Mikrocontroler" bezeichnet.

Mit dieser Anordnung wird ebenso wie bei der bekannten Anordnung nach der DE 199 10 750 A die Tatsache berücksichtigt, daß der maximal mögliche Hub des Arbeitskolbens bekannter Dehnkörper größer als der Weg ist, den der Stößel eines Ventils zwischen seiner Schließstellung einerseits und seiner Offenstellung andererseits zurücklegt. Die Länge dieses Weges des Stößels ist bekannt. Sie entspricht einer auf dem CCD-Array vorgebbaren Strecke mit bekannter Länge, beispielsweise 3 mm, welche von der Abdeckung - ausgehend von einer Nullposition - maximal überstrichen wird. Das CCD-Array ist - wie bereits erwähnt - mit einer sehr großen Anzahl von lichtempfindlichen Pixeln ausgerüstet, von denen dann eine elektrische Spannung auf der Rückseite des CCD-Arrays erzeugt wird, wenn Licht auf die Pixel fällt. Die Höhe der Spannung hängt von der Intensität bzw. Helligkeit des Lichts ab.

Von der Abdeckung, die mit dem Stellglied bewegt wird, wird in jeder Position eine relativ geringe Anzahl von Pixeln abgedeckt, so daß auf dieselben wenig oder gar kein Licht fällt, wenn das CCD-Array insgesamt belichtet ist. An den gering oder gar nicht belichteten Stellen des CCD-Arrays wird dann eine deutlich geringere Spannung gemessen. Die damit jeweils gegebene Position der Abdeckung über dem CCD-Array wird vom Mikroprozessor festgestellt und ausgewertet.

Eine andere Möglichkeit zur Wegmessung der Abdeckung besteht darin, daß in derselben eine Blende angebracht wird, beispielsweise ein Schlitz, durch welche Licht einer Lichtquelle auf die Pixel des CCD-Arrays fällt, das in diesem Fall nicht insgesamt belichtet wird. Die belichteten Pixel erzeugen eine deutlich höhere Spannung am CCD-Array, die wieder vom Mikroprozessor ausgewertet wird.

Die Ausführungsform der mit einer Blende versehenen Abdeckung wird im folgenden näher erläutert - stellvertretend auch für die Ausführungsform mit einer Abdeckung ohne Blende. Die Blende ist in bevorzugter Ausführungsform als Schlitzblende ausgeführt. Da ihre Form aber nicht wesentlich ist, werden im folgenden das Abbild des durch die Blende tretenden Lichts als "Lichtmuster" und die entsprechenden Spannungswerte als "Spannungsmuster" bezeichnet. Das Lichtmuster erzeugt also im CCD-Array ein mit der Abdeckung bewegtes Spannungsmuster. Die entsprechenden Spannungswerte werden dem Mikroprozessor aufgegeben, der damit genauestens die Position der Abdeckung und dadurch die Position des Stößels erkennt. Bei vorgegebener Maximalposition der Abdeckung wird der Schalter durch den Mikroprozessor geöffnet, so daß der Dehnkörper nicht mehr beheizt wird. Der Hub des Arbeitskolbens des Dehnkörpers wird damit auf den Weg begrenzt, den der Stößel zwischen seiner Schließstellung und seiner Offenstellung zurücklegt.

Durch die Begrenzung des Hubes des vom Dehnkörper bewegten Arbeitskolbens wird der Energieaufwand für die Einstellung eines Ventils wesentlich verringert. Wenn der Arbeitskolben des Dehnkörpers seinen eingestellten maximalen Hub ausgeführt hat, bei dem das zu betätigende Ventil voll geöffnet ist, wird die Stromzufuhr an den Widerstand unterbrochen. Es findet dann, bis auf einen Ruhestrom für die eingesetzten Baüteile, kein Energieverbrauch mehr statt. Neben dem verminderten Energieaufwand ergibt sich bei Einsatz dieser Anordnung auch eine niedrigere Erwärmung des Dehnkörpers. Das führt nicht nur zu einer erhöhten Lebensdauer desselben, sondern insgesamt auch zu einer schnelleren Reaktion der ganzen Anordnung. Wenn ein Ventil beispielsweise geschlossen werden soll, wird die Stromzufuhr an den Widerstand unterbrochen. Der Stößel des Ventils gelangt dann sehr schnell in die Schließstellung, da erstens der Arbeitskolben des Dehnkörpers nur einen durch die Hubbegrenzung bedingten kurzen Weg zurücklegen muß und weil zweitens der Dehnkörper wegen seiner geringeren Erwärmung schnell abkühlt.

Ausführungsbeispiele des Erfindungsgegenstandes sind in den Zeichnungen dargestellt.

Es zeigen:
Fig. 1 eine Schaltungsanordnung für eine Anordnung zur Einstellung eines Ventils als Bockschaltbild.
Fig. 2 eine mit der Anordnung nach der Erfindung arbeitende Vorrichtung im Schnitt in schematischer Darstellung.
Fig. 3 bis 6 bei der Anordnung einsetzbare Meßeinrichtungen nach der Erfindung.

Zentrales Element der Anordnung ist ein intelligentes elektronisches Schaltungsteil mit Speicherfunktion, ein Mikroprozessor 1. Er wird aus einer Spannungsquelle 2, die beispielsweise eine Wechselspannung von 24 V liefert, über ein Netzteil 3 gespeist, an dessen Ausgang beispielsweise 5 V Gleichspannung zur Verfügung stehen. An den Mikroprozessor 1 sind außerdem eine Meßeinrichtung 4 und ein Schalter 5 angeschlossen.

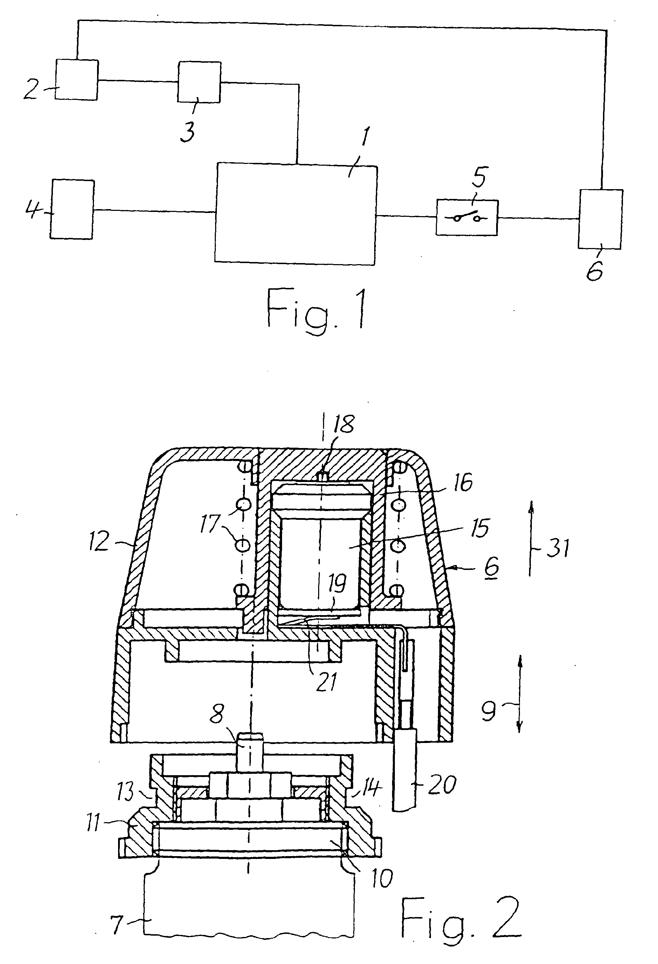

Mit der Anordnung kann eine Vorrichtung 6 gesteuert werden, wie sie prinzipiell aus Fig. 2 hervorgeht. Die Vorrichtung 6 wird auf ein nur schematisch angedeutetes Ventil 7 aufgesetzt. Das Ventil 7 hat einen Stößel 8, der unter der Wirkung einer der Einfachheit halber nicht mit dargestellten Ventilfeder steht und in Richtung des Doppelpfeiles 9 zwischen einer Offenstellung und einer Schließstellung verstellbar ist. Der Stutzen 10 des Ventils 7 ist beispielsweise mit einem Gewinde ausgerüstet, auf welches ein Halter 11 aufgeschraubt werden kann. Der beispielsweise aus Kunststoff bestehende Halter 11 dient zur Festlegung eines Gehäuses 12 der Vorrichtung 6 am Ventil 7. Dazu können im Gehäuse 12 beispielsweise federnd einrastende Haken angebracht sein, die in Montageposition in Ausnehmungen 13 und 14 des Halters 11 eingreifen. Das Gehäuse 12 kann aber auch auf andere Art und Weise am Ventil 7 befestigt werden, beispielsweise mittels einer Überwurfmutter.

Die Vorrichtung 7 selbst besteht - ohne Gehäuse 12 und Halter 11 - aus einem temperaturabhängigen Dehnkörper 15, einem in bevorzugter Ausführungsform topfartigen Stellglied 16 und einer Druckfeder 17. Der Dehnkörper 15 hat einen Arbeitskolben 18. Am Dehnkörper 15 ist außerdem ein als Heizelement dienender elektrischer Widerstand 19 angebracht, der über eine elektrische Leitung 20 und einen elektrischen Kontakt 21 an die Spannungsquelle 2 anschließbar ist.

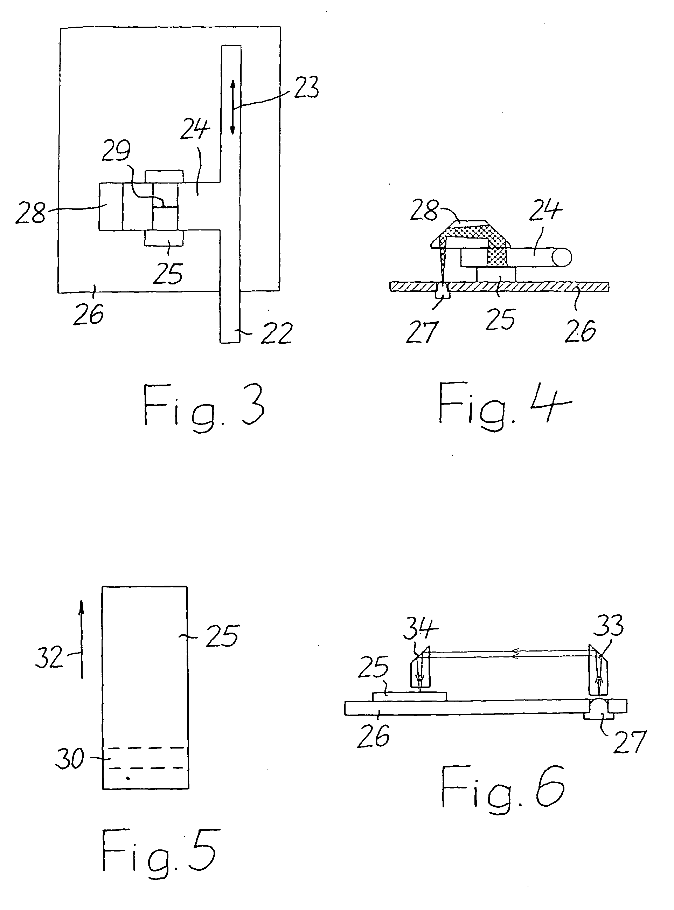

Die innerhalb des Gehäuses 12 der Vorrichtung 6 angeordnete Meßeinrichtung 4 ist in den Fig. 3 bis 6 in zwei Ausführungsbeispielen dargestellt. Sie weist gemäß Fig. 3 einen Schieber 22 auf, der mit dem Stellglied 16 der Vorrichtung 6 verbunden ist und bei einer Bewegung desselben in Richtung des Doppelpfeils 23 bewegt wird. Am Schieber 22 ist eine Abdeckung 24 angebracht, die über einem feststehenden CCD-Array 25 positioniert ist. Das CCD-Array 25 ist in bevorzugter Ausführungsform auf einer Leiterplatte 26 angebracht. Es ist elektrisch mit dem Mikroprozessor 1 verbunden.

In der dargestellten, bevorzugten Ausführungsform ist in der Leiterplatte 26 eine Lichtquelle 27 angebracht, bei der es sich beispielsweise um eine LED handelt. Das Licht der Lichtquelle 27 wird mittels eines Prismas 28 so geführt, daß es als Lichtkegel von oben auf die Abdeckung 24 fällt. In der Abdeckung 24 ist eine als Schlitz ausgeführte Blende 29 vorhanden, durch welche das Licht auf das darunter befindliche CCD-Array 25 fällt. Das dadurch auf dem CCD-Array 25 erzeugte Lichtmuster ist ein Streifen 30 (Fig. 5), wenn die Blende 29 ein Schlitz ist.

Bei einer Bewegung des Schiebers 22 in Richtung des Doppelpfeils 23 wird der Streifen 30 relativ zum feststehenden CCD-Array 25 bewegt. Er erzeugt dabei auf der Rückseite desselben ein korrespondierendes Spannungsmuster - hier also auch einen Streifen -, das dem Mikroprozessor 1 zugeführt und von diesem ausgewertet wird. Wenn das CCD-Array 25 - wie bereits erwähnt - bei einer Länge von 5 mm 640 Pixel hat, dann sind auf einer Länge von 1 mm 128 angeordnet, die bei Belichtung eine definierte Spannung erzeugen.

Die Länge des CCD-Arrays 25 ist ebenso wie die einem maximalen Hub des Arbeitskolbens 18 von beispielsweise 3 mm entsprechende Länge im Mikroprozessor 1 gespeichert. Diese wird vom Mikroprozessor 1 während des Betriebs der Anordnung überwacht, und zwar ausgehend von einer Nullposition. Die Nullposition wird beispielsweise dadurch festgelegt und im Mikroprozessor gespeichert, daß in einer Art Eichvorgang der Dehnkörper 15 so erwärmt wird, daß der Arbeitskolben 18 um 1 mm aus demselben heraustritt. Danach wird die Beheizung des Dehnkörpers 15 abgebrochen. Die nach vollständiger Abkühlung erreichte Position des Stellgliedes 16 und damit der Abdeckung 24 ist die Nullposition.

Die Anordnung nach der Erfindung arbeitet mit einer Meßeinrichtung 4 nach den Fig. 3 und 4 beispielsweise wie folgt:

Sobald der Schalter 5 geschlossen ist, wird der Widerstand 19 erwärmt. Der Dehnkörper 15 dehnt sich dann aus, wodurch sein Arbeitskolben 18 aus demselben herausgedrückt wird. Er nimmt das Stellglied 16 in Richtung des Pfeiles 31 (Fig. 2) mit. Dadurch wird die Druckfeder 17 zusammengedrückt. Der Stößel 8 wird entlastet, so daß das Ventil 7 durch seine Ventilfeder geöffnet wird. Zusammen mit dem Stellglied 16 wird die Abdeckung 24 bewegt. Der Streifen 30 des Lichtmusters wird dabei in Richtung des Pfeiles 32 (Fig. 5) bewegt. Das gilt auch für das korrespondierende Spannungsmuster, das im Mikroprozessor 1 ausgewertet wird. Diese Auswertung kann beispielsweise mittels eines Komparators sehr genau durchgeführt werden, der aus den in Form von Spannungsimpulsen mit ansteigender und abfallender Flanke vorliegenden Spannungswerten jeweils den Mittelwert bildet. Wenn der Arbeitskolben 18 des Dehnkörpers 15 seinen maximalen Hub durchgeführt hat, dann haben auch der Streifen 30 und das korrespondierende Spannungsmuster ihren im Mikroprozessor 1 gespeicherten maximalen Weg von beispielsweise 3 mm über dem CCD-Array 25 zurückgelegt. Der Schalter 5 wird dann durch den Mikroprozessor 1 geöffnet. Dadurch wird der Widerstand 19 von der Spannungsquelle 2 getrennt. Der Dehnkörper 15 kühlt ab und Arbeitskolben 18 sowie Stellglied 16 gehen in ihre Ausgangsposition zurück.

In den Fig. 3 und 4 ist für die Führung des Lichts der Lichtquelle 27 ein doppelbrechendes Prisma 28 vorgesehen, das einen ausreichend breiten Lichtkegel über der Abdeckung 24 erzeugt. Die Meßeinrichtung 4 kann gemäß Fig. 6 aber auch mit zwei getrennten Prismen 33 und 34 ausgerüstet sein, von denen das Prisma 33 ortsfest über der Lichtquelle 27 angeordnet ist, während das Prisma 34 zusammen mit der Abdeckung 24 bewegt wird. Das Licht der Lichtquelle 27 ist zwischen den beiden Prismen 33 und 34 gut gebündelt.

Die Meßeinrichtung 4 ist im Vorangehenden mit einer feststehenden Lichtquelle 27 beschrieben, deren Licht umgelenkt wird. Grundsätzlich könnte statt dessen auch direkt oberhalb der Abdeckung 24 eine Lichtquelle angebracht sein, die außerdem zusammen mit der Abdeckung 24 bewegt werden könnte.

## Patentansprüche

1. Anordnung zur Einstellung eines Ventils, das einen unter der Wirkung einer Ventilfeder stehenden und zwischen zwei Endstellungen in axialer Richtung verstellbaren Stößel aufweist, wobei zur Verstellung des Stößels ein mit einem in seiner Achsrichtung bewegbaren Arbeitskolben ausgerüsteter, temperaturabhängiger Dehnkörper am Ventil befestigt ist, der durch einen an eine Spannungsquelle anschließbaren, elektrischen Widerstand beheizbar ist und dem ein durch den Arbeitskolben des Dehnkörpers bewegbares Stellglied zugeordnet ist, auf welches eine Druckfeder einwirkt, welche das Ventil bei nicht beheiztem Widerstand entgegen der Wirkung der Ventilfeder geschlossen hält und welche bei beheiztem, sich ausdehnendem Dehnkörper durch das dabei von demselben bewegte Stellglied zusammengedrückt wird, so daß das Ventil durch die Ventilfeder geöffnet wird, bei welcher zwischen dem Widerstand und der Spannungsquelle ein durch einen Mikroprozessor zu betätigender, elektrischer Schalter angeordnet ist und bei welcher an den Mikroprozessor eine mit dem Stellglied gekoppelte Meßeinrichtung elektrisch leitend angeschlossen ist, die von der Position des Stellgliedes abhängige elektrische Spannungswerte an den Mikroprozessor liefert,
**dadurch gekennzeichnet,**
- **daß** die Meßeinrichtung (4) ein feststehendes, lineares CCD-Array (25) aufweist, das eine mit einer Vielzahl von Pixeln bestückte Oberseite und eine Unterseite hat, an der elektrische Spannungswerte abgreifbar sind, deren Größe von der Intensität von auf die Pixel fallendem Licht abhängig ist, und das mit dem Mikroprozessor (1) verbunden ist, und
- **daß** mit dem Stellglied (16) eine über der Oberseite des CCD-Arrays (25) bewegbare Abdeckung (24) verbunden ist, deren Abmessungen klein sind im Verhältnis zu den Abmessungen des CCD-Arrays (25), durch welche in Abhängigkeit von der Position des Stellgliedes (16) eine der Form der Abdeckung (24) entsprechende Anzahl von Pixeln des CCD-Arrays (25) abgedeckt oder belichtet ist.

2. Anordnung nach Anspruch 1, **dadurch gekennzeichnet, daß** die Abdeckung (24) als Blende (29) ausgeführt ist, der eine Lichtquelle (27) zugeordnet ist, deren Licht auf der dem CCD-Array (25) abgewandten Seite auf die Blende (29) und durch dieselbe auf das CCD-Array (25) fällt.

3. Anordnung nach Anspruch 2, **dadurch gekennzeichnet, daß** die Lichtquelle (27) als feststehende Lichtquelle ausgeführt ist, deren Licht über mindestens ein Prisma (28,33,34) in Richtung der Blende (29) geführt ist.

4. Anordnung nach Anspruch 1, **dadurch gekennzeichnet,**
- **daß** das CCD-Array (25) an seiner Oberseite insgesamt belichtet ist und
- **daß** die Abdeckung (24) lichtundurchlässig ist.

## Claims

1. Arrangement for adjusting a valve, which has a stem that is subjected to the action of a valve spring and can be adjusted in an axial direction between two end positions, there being fastened on the valve for the purpose of adjusting the plunger a temperature-dependent expansion body which is equipped with a working plunger that can be moved in its axial direction, can be heated by an electric resistor that can be connected to a voltage source, and which is assigned an actuator that can be moved by the working plunger of the expansion body and which is acted upon by a pressure spring which, in the event of an unheated resistor keeps the valve closed against the action of the valve spring and which, in the event of a heated, expanding expansion body, is compressed by the actuator, which is moved in this case by said expansion body, such that the valve is opened by the- valve spring, in the case of which arrangement an electric switch operated by a microprocessor is arranged between the resistor and the voltage source, and in the case of which arrangement a measuring device coupled to the actuator is connected in an electrically conducting fashion to the microprocessor and supplies the microprocessor with electric voltage values dependent on the position of the actuator,
**characterized**
- **in that** the measuring device (4) has a stationary, linear CCD array (25) which has a top side, fitted with a multiplicity of pixels, and a bottom side at which it is possible to tap electric voltage values whose magnitude is a function of the intensity of light falling on the pixels, and which array is connected to the microprocessor (1), and
- **in that** connected to the actuator (16) is a cover (24) which can be moved over the top side of the CCD array (25), whose dimensions are small in relation to the dimensions of a CCD array (25), and by means of which a number of pixels of the CCD array (25) corresponding to the shape of the cover (24) are covered or exposed as a function of the position of the actuator (16).

2. Arrangement according to Claim 1, **characterized in that** the cover (24) is designed as an orifice (29) which is assigned a light source (27) whose light falls, on the side averted from the CCD array (25), onto the orifice (29) and through the latter onto the CCD array (25).

3. Arrangement according to Claim 2, **characterized in that** the light source (27) is designed as a stationary light source whose light is guided in the direction of the orifice (29) via at least one prism (28, 33, 34).

4. Arrangement according to Claim 1, **characterized**
- **in that** the CCD array (25) is exposed overall on its top side, and
- **in that** the cover (24) is opaque.

## Revendications

1. Agencement pour le réglage d'une soupape, comportant un pilon réglable soumis à l'action d'un ressort de soupape et pouvant se déplacer entre deux positions finales en direction axiale, le réglage du pilon étant effectué au moyen d'un corps extensible en fonction de la température, qui est fixé sur la soupape et équipé d'un piston de travail mobile dans la direction de son axe, qui peut être chauffé au moyen d'une résistance électrique pouvant être reliée à une source de tension et auquel est attribué un organe de réglage mobile grâce au piston de travail du corps extensible, sur lequel agit un ressort de pression qui maintient la soupape fermée contre l'effet du ressort de soupape lorsque la résistance n'est pas chauffée et qui est compressé par l'organe de réglage déplacé lorsque le corps extensible est chauffé et qu'il se détend, si bien que la soupape s'ouvre sous l'effet du ressort de soupape, pour lequel il existe un interrupteur électrique situé entre la résistance et la source de tension et pouvant être actionné par un microprocesseur, un dispositif de mesure couplé à l'organe de réglage étant raccordé électriquement au microprocesseur, fournissant des valeurs de tension électriques dépendant de la position de l'organe de réglage au microprocesseur,
**caractérisé en ce que**
- le dispositif de mesure (4) comporte un ensemble d'éléments à couplage de charge linéaire fixe (25), qui possède une face supérieure pourvue d'une multitude de pixels et une face inférieure, sur laquelle peuvent être relevées des valeurs de tension électriques, dont la grandeur dépend de l'intensité de la lumière projetée sur les pixels, et qui est relié au microprocesseur (1), et
- un cache (24) mobile situé au-dessus de la face supérieure de l'ensemble d'éléments à couplage de charge (25) est relié à l'organe de réglage (16), avec des dimensions plus petites que celles de l'ensemble d'éléments à couplage de charge (25), au moyen duquel un nombre de pixels de l'ensemble d'éléments à couplage de charge (25) correspondant à la forme du cache . (24) peut être caché ou éclairé en fonction de la position de l'organe de réglage (16).

2. Agencement selon la revendication 1, **caractérisé en ce que** le cache (24) est conçu comme un diaphragme (29), auquel est attribuée une source de lumière (27), dont la lumière est projetée sur la face opposée à l'ensemble d'éléments à couplage de charge (25) sur le diaphragme (29) et à travers celui-ci sur l'ensemble d'éléments à couplage de charge (25).

3. Agencement selon la revendication 2, **caractérisé en ce que** la source de lumière (27) est conçue comme une source de lumière fixe, dont la lumière est guidée en direction du diaphragme (29) par au moins un prisme (28, 33, 34).

4. Agencement selon la revendication 1, **caractérisé en ce que**
- la face supérieure de l'ensemble d'éléments à couplage de charge (25) est entièrement éclairée et
- le cache (24) est opaque.
